# EUROPEAN PATENT SPECIFICATION

(11) **EP 1 848 189 B1**
(45) Date of publication and mention of the grant of the patent: **11.04.2012**
(21) Application number: 06775214.7
(22) Date of filing: 24.07.2006
(51) Int. Cl.: H04M 3/42

(54) **A METHOD FOR IMPLEMENTING A MULTI-MEDIA RINGBACK AND A SYSTEM THEREOF**
VERFAHREN ZUR IMPLEMENTIERUNG EINES MULTIMEDIA-RÜCKRUFES UND SYSTEM DAFÜR
PROCEDE POUR METTRE EN APPLICATION UN RAPPEL MULTIMEDIA ET UN SYSTEME CORRESPONDANT

(30) Priority: 22.07.2005 CN 200510085330
(43) Date of publication of application: 24.10.2007
(73) Proprietor: Huawei Technologies Co., Ltd., Longgang District, Shenzhen Guangdong 518129 (CN)
(72) Inventor: MO, Xiaojun, Huawei Administration Building, Shenzhen, Guangdong 518-129 (CN); LIN, Lin, Huawei Administration Building, Shenzhen, Guangdong 518-129 (CN); WANG, Kefeng, Huawei Administration Building, Shenzhen, Guangdong 518-129 (CN)
(74) Representative: Körber, Martin Hans
(86) International application number: PCT/CN2006/001819
(87) International publication number: WO 2007/009402

(56) References cited:
- EP-A- 1 860 859
- WO-A-2004/054282
- WO-A-2004/084566
- WO-A2-01/06735
- WO-A2-2005/043926
- US-A1- 2004 114 732

## Description

### Field of the Invention

The present invention relates to ring back tone (RBT) technologies, and more particularly to a method and system for implementing a multimedia RBT service.

### Background of the Invention

An individualized RBT service has emerged in the Global System for Mobile Communications (GSM). RBT service refers to a service for playing various rings to a calling party according to the customization of a called party. The rings include various audio files, e.g., music, songs, stories and dialogues. When the calling party initiates a call, a ring customized by the called party is played to the calling party before the called party picks up the phone. A ring corresponding to a calling number may further be played to the calling party according to the corresponding relationship between the calling number and the ring customized by the called party. Thanks to the RBT service, the calling party will no longer have to hear monotonous beeps before the called party answers the call, which fully displays the more and more advocated individualized services.

Using a soft switch as its control core and a packet switching network as its transmission network, the 3rd Generation network (3G) following R99 is a comprehensive and completely open network platform system capable of simultaneously providing a variety of services, e.g., voice, data and multimedia. However, the 3G network capable of providing multimedia services may only provide audio RBT services for the time being, and no specific solution is put forward for implementing a multimedia RBT by making use of the feature of the 3G network. For example, multimedia videos may not, in place of an ordinary RBT, be played to a calling party when a 3G network user makes a video call. This is a great pity for the 3G network capable of providing a variety of services.

### Summary of the Invention

The present invention provides a method for implementing a multimedia RBT service so as to implement a multimedia RBT service in the 3G network.

The present invention provides a system for implementing a multimedia RBT service so as to implement a multimedia RBT service in the 3G network.

A method for implementing a multimedia Ring Back Tone, RBT, service, includes:
initiating (203), by a calling Mobile Switching Center, MSC, server, a call to a called MSC server upon receiving a call request, and
receiving (204), by the calling MSC server, a notification of success of paging the called party from the called MSC server;
performing, by the calling MSC server or the called MSC server, a first media capability negotiation between a calling party and a Media Resource Server, MRS; and
instructing, by the calling MSC server, the MRS to play a multimedia RBT to the calling party according to a result of the first media capability negotiation, wherein the multimedia RBT played by the MRS to the calling party is played via a Media Gateway, MGW.

A system for implementing a multimedia Ring Back Tone, RBT, service, includes:
a Home Location Register, HLR, a Mobile Switching Center, MSC, server, a Media Resource Server, MRS, and a Media Gateway, MGW, the MSC server connecting with the HLR, MRS and MGW respectively, and the MRS connecting with the MGW;
the HLR is capable of storing subscription information of a called party and providing the subscription information for the MSC server;
the MSC server is capable of controlling a call procedure, instructing the MRS to play a multimedia RBT to the called party, and controlling the MGW to perform an interaction of the media information in the call procedure;
the MGW is capable of performing an interaction of the media information in the call procedure under the control of the MSC server;
the MRS is capable of storing the multimedia RBT, and playing the multimedia RBT to the calling party according to a result of a media capability negotiation under the control of the MSC server;
wherein the MRS play the multimedia RBT to the calling party is played via the MGW.

In accordance with the solution put forward by some embodiments of the present invention, a multimedia RBT service may be implemented in a 3G network; moreover, the embodiments of the present invention enable original audio RBT services in a hybrid 3/2G network and the 3G network to coexist with the multimedia RBT services, thus ensuring the implementation of the multimedia RBT services. In some embodiments of the present invention, a Media Resource Server (MRS) may determine whether to play a multimedia RBT to a calling party according to the current media capability of the calling party; if the media capability of the calling party supports the multimedia RBT, the MRS shall play the multimedia RBT to the calling party; if the media capability of the calling party does not support the multimedia RBT, the MRS may play an audio RBT to the calling party, thus enabling a multimedia RBT service to coexist with an audio RBT service in the existing 3G network.

In addition, in accordance with other embodiments of the present invention, even though a called party who has subscribed to a multimedia RBT service is a user in the 2G network, as long as the calling party initiating a call to the called party is the user in the 3G network, the multimedia RBT service may still be implemented and the calling party may receive the multimedia RBT played thereto.

Moreover, in accordance with other embodiments of the present invention, when the calling party does not support a second media capability negotiation, the calling MSC server may perform a media capability negotiation with the called party according to the media capability of the calling party, thus providing a flexible manner for the media capability negotiation; in this way, even though a variety of media format standards appear due to the implementation of multimedia RBT services during a call, there will be no impact on the ordinary communication between the calling party and the called party.

### Brief Description of the Drawings

Figure 1 is a schematic drawing illustrating the structure of a system for implementing a multimedia RBT service in accordance with an embodiment of the present invention.
Figure 2 is a flowchart illustrating a procedure for implementing a multimedia RBT service in accordance with another embodiment of the present invention.
Figure 3 is a flowchart illustrating message interaction for implementing a multimedia RBT service in accordance with another embodiment of the present invention.

### Embodiments of the Invention

Embodiments are hereinafter described in details with reference to the accompanying drawings to further clarify the technical scheme and advantages of the present invention.

A multimedia RBT service refers to a service for playing various multimedia files customized by a called party to a calling party, and the multimedia files maybe include segments of films or cartoons favored by a called party, photos self-taken by the called party, segments of multimedia made by the called party himself, commercial advertisements, etc.

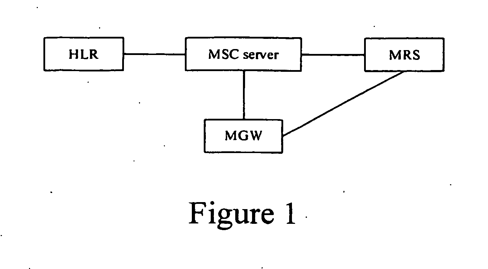

Figure 1 is a schematic drawing illustrating the structure of a system for implementing a multimedia RBT service in accordance with an embodiment of the present invention. As shown in Figure 1, the system for implementing the multimedia RBT service includes: a Home Location Register (HLR), a Mobile Switching Center (MSC) server, an MRS and a Media Gateway (MGW). The MSC server is connected to the HLR, the MGW and the MRS respectively, and the MRS is connected to the MGW. The HLR is used for storing user subscription information, and providing the user subscription information for the MSC server. The MSC server is used for controlling a call procedure, controlling the MRS to play a multimedia RBT to a calling party, and controlling the MGW to perform the interaction of media information in the call procedure. The MGW is used for performing the interaction of media information in the call procedure according to the control of the MSC server. The MRS supports a multimedia format, and is used for storing a multimedia RBT and playing the multimedia RBT to the calling party according to the control of the MSC server and the result of media capability negotiation.

An MSC server may control the call procedure through call signaling of Radio Access Network (RAN) and information acquired by communicating with the HLR. The call procedure includes initiating a call, connecting a call, and other processes. The MSC server may control the MGW to perform the interaction of media information in the call procedure via the H.248 protocol, the Media Gateway Control Protocol (MGCP), etc.

When there are both audio RBT services and multimedia RBT services, the system for implementing a multimedia RBT service further includes: an audio resource server supporting an audio format, used for storing an audio RBT and playing the audio RBT to the calling party according to the control of the MSC server. The HLR is further used for determining whether the user has subscribed to an audio RBT service or a multimedia RBT service, or determining that the user has subscribed no RBT service, and providing the MSC server with the determined user subscription information. The audio resource server and the MRS may be disposed in the same device. The audio RBT includes, for example, various Color Ring Back Tones (CRBTs), but is not limited to, music, songs, stories, dialogues, etc.

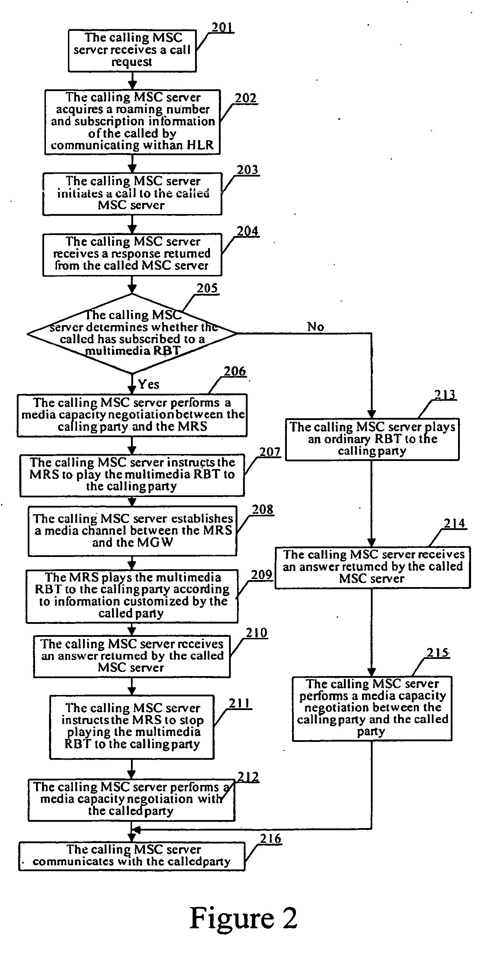

Figure 2 is a flowchart illustrating a procedure for implementing a multimedia RBT service in accordance with an embodiment of the present invention. As shown in Figure 2, the process for implementing a multimedia RBT service includes the following process.

Block 201-202: Upon receipt of a call initiated by a calling party to a called party, a calling MSC server acquires a roaming number and subscription information of the called party by communicating with an HLR.

The process of acquiring the roaming number by the calling MSC server by communicating with the HLR includes: the calling MSC server requests the HLR to provide the roaming number of the called party, and provides the HLR with the called number. Upon receipt of the request of the calling MSC server, the HLR requests a called MSC server to provide the roaming number according to the called number. Upon receipt of the request of the HLR, the called MSC server provides the HLR with the roaming number. Upon receipt of the roaming number, the HLR provides the calling MSC server with the roaming number. Since the subscription information of the called party is stored in the HLR, the HLR may provide the calling MSC server with the subscription information stored in the HLR.

Block 203-204: Upon receipt of the roaming number and the subscription information of the called party, the calling MSC server initiates a call to the called MSC server according to the roaming number. Upon receipt of the call, the called MSC server initiates paging to the called party, and returns a response to the calling MSC server when determining that the called party is currently in an idle state.

Block 205: Upon receipt of the response, the calling MSC server determines whether the called party has subscribed to a multimedia RBT service; if the called party has subscribed to the multimedia RBT service, performs Block 206; otherwise, performs Block 213.

206: The calling MSC server performs a media capability negotiation between the calling party and an MRS, and the process of the media capability negotiation includes: the calling MSC server performs a media capability negotiation with the calling party, and then performs a media capability negotiation with the MRS according to the result of the media capability negotiation with the calling party; or the calling MSC server first performs a media capability negotiation with the MRS, and then performs a media capability negotiation with the calling party according to the result of the media capability negotiation with the MRS.

207: The calling MSC server routes a message to the MRS according to the configured MRS address information to instruct the MRS to play a multimedia RBT to the calling party, and provides the MRS with the called number.

208: Upon receipt of the notification, the MRS establishes a media channel between the MRS and the MGW so that the MRS may play the multimedia RBT to the calling party via the MGW.

209: After having established the media channel, the MRS finds the multimedia RBT customized by the called party according to the called number, i.e., finds the multimedia RBT corresponding to the called number, and then plays to the calling party the multimedia RBT customized by the called party according to the result or the media capability negotiation.

The multimedia RBT customized by the called party may be the multimedia RBT corresponding to the called number, or may also be the multimedia RBT corresponding to the combination of the called number and the calling number to implement different multimedia RBTs customized by the called party for the different calling parties. In this way, when the called party customizes different multimedia RBTs for the different calling parties, the calling MSC server may further provide the MRS with the calling number in Block 207, and the MRS may find, according to the called number and the calling number in Block 209, the multimedia RBT corresponding to the calling party customized by the called party, i.e. the multimedia RBT corresponding to the combination of the called number and the calling number, thus playing different multimedia RBTs to the different calling parties as subscribed by the called party with better diversified implementation of the multimedia RBT service.

The above process of playing multimedia RBT by the MRS to the calling party refers to that the result of media capability negotiation supports the multimedia RBT; if the result of media capability negotiation does not support the multimedia RBT, MRS may play to the calling party an audio RBT which may be either as customized by the called party or as selected randomly for the calling party by the MRS.

Block 210: Upon receipt of the answer given by the called party, the called MSC server returns an answer to the calling MSC server to notify the calling MSC server that the called party has given an answer.

Block 211: Upon detecting the notification that the called MSC server answers the call, the calling MSC server instructs the MRS to stop playing the multimedia RBT to the calling party, and controls the MGW to release the media channel between the MGW and the MRS. Upon receipt of the instruction, the MRS stops playing the multimedia RBT to the calling party, and release the media channel between the MGW and the MRS.

Block 212: The calling MSC server performs a media capability negotiation with the called party, and then performs Block 216. If the calling party does not support a second media capability negotiation, the process of performing a media capability negotiation by the calling MSC server with the called party includes: the calling MSC server performs a media capability negotiation with the called party via the called MSC server according to the result of the media capability negotiation with the calling party in Block 205, thus normally communicating with the called party without the need for the calling party to conduct the second media capability negotiation. If the calling party is not consistent with the called party in the media capability upon the media capability negotiation, the calling MSC server may control the MGW to make a media format conversion so as to ensure the normal communication between the calling party and the called party.

Block 213-215: The calling MSC server plays a monotonous ordinary RBT such as beeps, to the calling party, and upon receipt of the answer returned by the called MSC server, the calling MSC server performs a media capability negotiation between the calling party and the called party. The media capability negotiation specifically includes: the calling MSC server first performs a media capability negotiation with the calling party and then, according to the result of the media capability negotiation with the calling party, performs a media capability negotiation with the called party; or the calling MSC server first performs a media capability negotiation with the called party and then, according to the result of the media capability negotiation with the called party, performs a media capability negotiation with the calling party.

Block 216: The calling party communicates with the called party according to the result of the media capability negotiation.

In addition, upon receipt of the answer returned by the called MSC server, the calling MSC server also may first perform Block 212, and then perform Block 211. That's to say the calling MSC server first performs a media capability negotiation with the called party, controls the MGW to remove the media channel between the MGW and the MRS upon the media capability negotiation with the called party, and then performs Block 216. When the calling party communicates with the called party, the calling MSC server instructs the MRS to stop playing the multimedia RBT, and upon receipt of the answer, the MRS stops playing the multimedia RBT to the calling party and releases the media channel between the MRS and the MGW. Upon receipt of the answer returned by the called MSC server, the calling MSC server may also perform Blocks 211 and 212 simultaneously, i.e., the calling MSC server performs a media capability negotiation with the calling party while instructs the MRS to stop playing the multimedia RBT to the calling party, and controls the MGW to remove the media channel between the MGW and the MRS. Upon detecting the notification, the MRS stops playing the multimedia RBT to the calling party, and releases the media channel. Upon the media capability negotiation with the called party, the calling party communicates with the called party.

If a traditional audio RBT service is still kept in the network, after a multimedia RBT service is supplemented in the network, there will be both the audio RBT service and the multimedia RBT service in the network. If a server for playing the audio RBT to the calling party is a different device from an MRS, i.e., the MRS plays a multimedia RBT to the calling party while an audio source server plays an audio RBT to the calling party, then when requesting the HLR to provide a roaming number, the HLR may first determine whether the called party has subscribed to an RBT service. If the called party has subscribed to the RBT service, the HLR continues to determine whether the called party has subscribed to an audio RBT service or a multimedia RBT service, and then the HLR provides the calling MSC server with the subscription information of the called party for indicating whether the called party has subscribed to the audio RBT service or the multimedia RBT service. If the called party has not subscribed to the RBT service, the HLR notifies the calling MSC server that the called party has not subscribed to the RBT service, and the calling MSC server plays an ordinary monotonous RBT, or beeps, to the calling party upon receipt of an answer given by the called MSC server.

When determining that it needs to play an RBT to the calling party, the calling MSC server, according to the subscription information of the called party provided by the HLR, determines whether the called party has subscribed to an audio RBT service or a multimedia RBT service; if the called party has subscribed to the audio RBT service, the calling MSC server routes a message to an audio source server for playing the audio RBT to the calling party, and instructs the audio source server to play an audio RBT to the calling party. If the called party has subscribed to the multimedia RBT service, the calling MSC server routes a message to the MRS, and instructs the MRS to play a multimedia RBT to the calling party.

If the server for playing an audio RBT to the calling party and an MRS can be implemented in a equipment for implementing an RBT, when a calling MSC server requests an HLR to provide a roaming number, after determining that the called party has subscribed to an RBT service, the HLR directly provides the calling MSC server with the subscription information of the called party, without determining whether the called party has subscribed to an audio RBT service or a multimedia RBT service. When determining that it needs to play an RBT to the calling party, the calling MSC server routes a message to the equipment for implementing the RBT, and instructs the equipment for implementing the RBT to play the RBT to the calling party. Because the RBT customized by the called party is stored in the equipment for implementing the RBT, the corresponding type of RBT may be played according to customization information, i.e., if the called party has subscribed to an audio RBT service, the equipment for implementing the RBT plays the audio RBT to the calling party; if the called party has subscribed to a multimedia RBT service, the equipment for implementing the RBT plays the multimedia RBT to the calling party.

If the server for playing an audio RBT to the calling party and an MRS are implemented in equipment for implementing an RBT, the called party may also customize the RBTs of different types for the different callings, and when playing an

RBT to the calling party, the equipment for implementing the RBT plays the RBT of the type corresponding to the calling party as customized by the called party. For example, the called party customizes audio RBT 1 for calling A, multimedia RBT 1 for calling B, multimedia RBT 2 for calling C, audio RBT 2 for calling D; if calling A calls the called party, the equipment for implementing an RBT plays audio RBT 1 to calling A; if calling B calls the called party, the equipment for implementing an RBT plays multimedia RBT 1 to calling B; if calling C calls the called party, the equipment for implementing an RBT plays multimedia RBT 2 to calling C; if calling D calls the called party, the equipment for implementing an RBT plays audio RBT 2 to calling D.

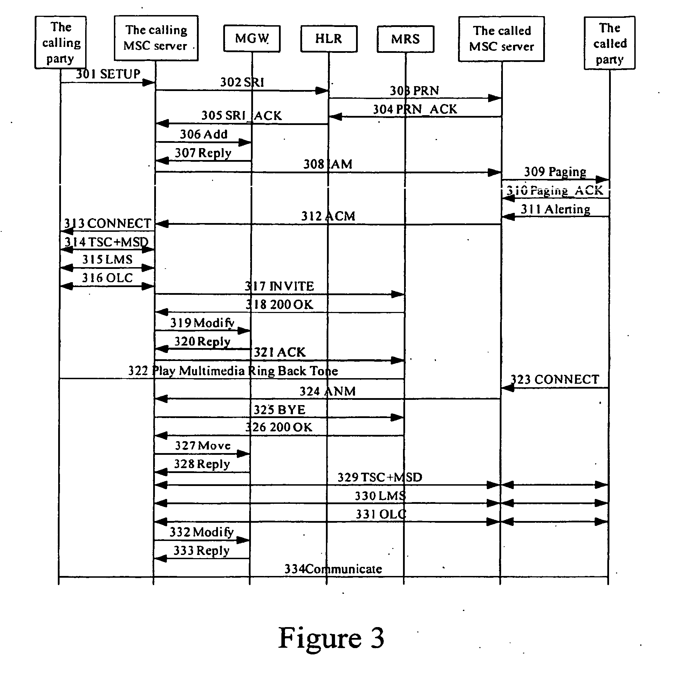

Figure 3 is a flowchart illustrating message interaction for implementing a multimedia RBT service in accordance with still another embodiment of the present invention. As shown in Figure 3, if a Session Initiation Protocol (SIP) is, for example, used between a calling MSC server and an MRS, the message interaction process for implementing a multimedia RBT service includes the following processes.

Processes 301-302: The calling party sends a call request, or SETUP, carrying both a called number and a calling number, to a calling MSC server. Upon receipt of the SETUP, the calling MSC server sends to an HLR a Send Routing Information (SRI) for acquiring a Mobile Station Roaming Number (MSRN) of the called party.

Process 303: Upon receipt of the SRI, the HLR sends to a called MSC server a Provide Roaming Number (PRN) to request the called MSC server to provide the MSRN of the called party. The called MSC server is an MSC server in which the called party is located currently.

Process 304: Upon receipt of the PRN, the called MSC server allocates the MSRN for the called party, and then returns to the HLR a Provide Roaming Number Acknowledgement (PRN_ACK) carrying the MSRN.

Process 305: Upon receipt of the PRN_ACK, the HLR returns to the calling MSC server a Routing Acknowledgement (SRI_ACK) carrying both the MSRN and subscription information of the called party. The subscription information of the called party may be an identifier for identifying whether the called party has subscribed to a multimedia RBT service, e.g., indicating that the called party has subscribed to a multimedia RBT by 1, and has not subscribed to a multimedia RBT by 0.

Process 306: Upon receipt of the SRI_ACK, the calling MSC server sends to the MGW an adding message, or Add, instructs the MGW to create a new Context, and instructs the MGW to reserve the Time Division Multiplex (TDM) end point, Real-Time Transport Protocol (RTP) end point and multiplexing end point to be used in the subsequent call process.

Process 307: Upon receipt of the Add, the MGW creates a new Context so as to use the Context to transmit call related medium stream in the subsequent call process, reserves the TDM end point, RTP end point and multiplexing end point to be used in the subsequent call process, and then returns to the calling MSC server a Reply to notify the calling MSC server that the Context has been created. The Reply contains the TDM end point, the RTP end point and the multiplexing end point reserved by the MGW.

Process 308: Upon receipt of the Reply, the calling MSC server, according to the roaming number acquired in Block 305, sends to the called MSC server an Initial Address Message (IAM), and initiates a call.

Process 309: Upon receipt of the IAM, the called MSC server sends to the called party a paging message, or Paging, to page the called party.

Processes 310-311: Upon receipt of the Paging, the called party in an idle state, sends to the called MSC server a Paging Acknowledgement (Paging-ACK), and sends to the called MSC server a signal message, or Alerting, to notify the called MSC server of the success of paging the called party.

Process 312: Upon receipt of the Paging-ACK and the Alerting, the called MSC server returns to the calling MSC server an Address Complete Message (ACM) to notify the calling MSC server of the success of paging the called party. The success of paging the called party refers to that the called party is currently in the idle state.

Process 313: Upon receipt of the ACM, the calling MSC server returns to the calling party a connection message, CONNECT, to set up a call.

Process 314-316: Upon receipt of the CONNECT, the calling party may adopt the H.245 protocol to perform a media capability negotiation with the calling MSC server, communicate a self-supported capability set with the calling MSC server via a Terminal Capability Set (TCS) message and select the media capability information used in the call process. The calling party may also make a master/slave determination with the calling MSC server via a Master Slave Determination (MSD) message, and thus determine the control relationship of media channel in the call process. MUXTAB information between the calling party and the calling MSC server is exchanged via a Local MUXTAB Send (LMS) message. And at last the media channel is established via an Open Logical Channel (OLC) message. Thus, the calling party completes the media capability negotiation with the calling MSC server and puts the network through.

Process 317: After successfully completing the media capability negotiation with the calling MSC server, according to the subscription information of the called party provided by the HLR in Process 305, the calling party determines that the called party has subscribed to a multimedia RBT service, and sends to the MRS an INVITE message to request the MRS to set up the call. The INVITE message, via the Session Description Protocol (SDP), carries the media capability information obtained by negotiating with the calling party, and carries the RTP end point in the MGW for media communication, i.e., RTP address and port. The RTP end point is the RTP end point acquired by the calling MSC server in Process 307. The INVITE message also carries the called number.

Process 318: Upon receipt of the INVITE message, the MRS selects media capability information according to the media capability information obtained by the negotiation between the calling MSC server and the calling party, returns to the calling MSC server a 200 OK acknowledgement, and puts the media channel between the MRS and the MGW through. The 200 OK acknowledgement carries the media capability information selected by the MRS, and carries the RTP end point in the MRS for media communication, i.e., RTP address and port.

In the above description, Processes 313-316 and precede Processes 317-318, i.e., the calling MSC server first performs a media capability negotiation with the calling party, and then, according to the result of the media capability negotiation with the calling party, performs a media capability negotiation with the MRS. As alternative way, Processes 317-318 may precede Processes 313-316, i.e., the calling MSC server first performs a media capability negotiation with the MRS, and then, according to the result of the media capability negotiation with the MRS, performs a media capability negotiation with the calling party.

Process 319: Upon receipt of the 200 OK acknowledgement, the calling MSC server sends to the MGW a modifying message, or Modify, carrying the media capability information, to request the MGW to modify the relevant information in the Context according to the result of the media capability negotiation between the calling MSC server and the MRS.

Process 320: Upon receipt of the Modify, the MGW modifies the relevant information in the Context as established in Process 307, e.g., the media capability information, puts the media channel between the MGW and the MRS through, and returns a Reply to the calling MSC server to notify the calling MSC server that the relevant information in the Context has been modified.

Process 321: Upon receipt of the Reply, the calling MSC server sends an ACK to the MRS to instruct the MRS to play the multimedia RBT to the calling party.

The above has described in detail the process of performing a media capability negotiation between the calling party and the MRS by the calling MSC server. However, the skilled in the art should know that it is only exemplary, and is not use to limit the scope of the invention. Alternatively, the media capability negotiation between the calling party and the MRS may also be performed by the called MSC server. Such a modification would be well known by the skilled in the art, so will give no detailed description here.

In the above process of performing Processes 317-318, the INVETE message, via the Session Description Protocol (SDP), carries the media capability information resulting from the media capability negotiation between the calling MSC server and the calling party, so that the MRS may select media capability information according to the media capability information provided by the calling MSC server, and carry the selected media capability information in the 200 OK acknowledgement returned to the calling MSC server. In addition, the INVETE message may not carry the media capability information resulting from the media capability negotiation between the calling MSC server and the calling party, and the MRS directly carries the media capability information of that MRS via the SDP in the 200 OK acknowledgement to be returned to the calling MSC server. The calling MSC server carries, in the ACK sent to MRS in Process 321, the media capability information selected according to the media capability information provided by the MRS.

Process 322: Upon receipt of the ACK, the MRS queries for the multimedia RBT corresponding to the called number, and then plays the multimedia RBT customized by the called party to the calling party according to the result of the media capability negotiation.

The calling MSC server may, in Process 317, further provide the MRS with the calling number, i.e., the calling number may further be carried in the INVITE message in Process 317. Thus in Process 322, the MRS queries for the multimedia RBT corresponding to the called number and the calling number to play different multimedia RBTs to the different callings as customized by the called party.

Processes 323-324: The called party gives an answer. The called party sends a CONNECT to the called MSC server, and the called MSC server sends an Answer Message (ANM) to notify the calling MSC server that the called party has given an answer, upon receipt of the CONNECT.

Processes 325-326: Upon receipt of the ANM, the calling MSC server sends a BYE message to the MRS to instruct the MRS to stop playing the multimedia RBT to the calling party. Upon receipt of the BYE, the MRS stops playing the multimedia RBT to the calling party, releases the media channel between the MRS and the MGW, and sends a 200 OK acknowledgement to the calling MSC server.

Processes 327-328: Upon receipt of the 200 OK acknowledgement, the calling MSC server sends a Move message to the MGW to instruct the MGW to release the media channel between the MGW and the MRS. Upon receipt of the Move message, the MGW removes the media channel between the MGW and the MRS, and returns a Reply to the calling MSC server.

Processes 329-331: Upon receipt of the Reply from the MGW, the calling MSC server may, using the H.245 protocol, performs a media capability negotiation with the called party via the called MSC server. The calling MSC server communicates with the called party for a self-supported capability set and selects the media capability information used in the call process, i.e., performs the media capability negotiation with the called party according to the result of the media capability negotiation with the calling party in Processes 314-316. The calling MSC server makes, with the called party, a master/slave determination via an MSD to determine the control relationship of the media channel in the call process. The calling MSC server exchanges MUXTAB information between the calling MSC server and the called party. At last the calling MSC server establishes the media channel via an OLC. And thus the calling MSC server completes the media capability negotiation with the called party, and puts the network through. If the calling party is not consistent with the called party in the media capability upon the media capability negotiation, the calling MSC server may control the MGW to make a media format conversion so as to ensure the normal communication between the calling party and the called party.

Upon receipt of the ANM sent by the called MSC server, the calling MSC server also may first perform Processes 327-331, then performs Processes 332-334, and finally performs Processes 325-326 during the communication between the calling party and the called party. Or alternatively, performs Processes 325-326 and Processes 327-331, and after that performs Processes 332-334.

Process 332: After successfully completing the media capability negotiation with the called party, the calling MSC server sends a Modify to the MGW, in which media capability information is carried, to request the MGW to modify the relevant information in the Context according to the result of the media capability negotiation between the calling MSC server and the called party.

Process 333: Upon receipt of the Modify, the MGW modifies the relevant information in the Context as established in Process 307, e.g., the media capability information, and returns a Reply to the calling MSC server to notify the calling MSC server that the relevant information in the Context has been modified.

Process 334: The calling party communicates with the called party according to the result of the media capability negotiation.

During the above message interaction, the SIP is used for the information interaction between the calling MSC server and MRS. Alternatively, other protocols besides the SIP, e.g., the H.245 protocol, the H.323 protocol, the MGCP, etc., may be used for the information interaction between the calling MSC server and the MRS. The protocol given in the embodiments of the invention is not limited in any way.

It can be seen from the above description that even though the called party who has subscribed to a multimedia RBT service is a user in the 2G network, as long as the calling party initiating a call to the called party, who is a user in the 3G network, a multimedia RBT service may still be implemented and the calling party may receive the multimedia RBT played to the calling party.

It should be emphasized that the above-described embodiments, particularly, any 'preferred' embodiments, are merely possible examples of implementations, merely set forth for a clear understanding of the principles of the invention. Many variations and modifications may be made to the above-described preferred embodiments without departing substantially from the principles of the invention. All such modifications and variations are intended to be included herein within the scope of this disclosure and the above-described preferred embodiments and protected by the following claims.

## Claims

1. A method for implementing a multimedia Ring Back Tone, RBT, service, comprising:
Initiating (203), by a calling Mobile Switching Center, MSC, server, a call to a called MSC server upon receiving a call request, and
receiving (204, 312), by the calling MSC server, a notification of success of paging the called party from the called MSC server;
**characterized by** comprising:
performing (206), by the calling MSC server or the called MSC server, a first media capability negotiation between a calling party and a Media Resource Server, MRS; and
instructing (207), by the calling MSC server, the MRS to play a multimedia RBT to the calling party according to a result of the first media capability negotiation wherein the multimedia RBT played by the MRS to the calling party is played via a Media Gateway, MGW.

2. The method of Claim 1, before initiating the call to the called MSC server, the method further comprising:
sending (306), by the calling MSC server, an adding message to the MGW to instruct the MGW to create a new Context and to reserve a Time Division Multiplex (TDM) end point, Real-Time Transport Protocol (RTP) end point and multiplexing end point to be used in call process;
receiving (307), by the calling MSC server, a reply indicating that the Context has been created after the MGW creates the Context and reserves the TDM end point, RTP end point and multiplexing end point, wherein the reply contains the TDM end point, the RTP end point and the multiplexing end point reserved by the MGW.

3. The method of Claim 2, after performing the first media capability negotiation between the calling party and the MRS, the method further comprising:
sending (319), by the calling MSC server, a modifying message carrying media capability information to the MGW to request the MGW to modify the relevant information in the Context according to the result of the media capability negotiation between the calling MSC server and the MRS;
receiving (320), by the calling MSC server, a reply indicating that the relevant information in the Context has been modified after the MGW modifies the relevant information in the Context and puts a media channel between the MGW and the MRS through.

4. The method of Claim 1, further comprising:
determining (205), by a calling Mobile Switching Center, MSC, server, that the called party has subscribed to a multimedia RBT service according to subscription information of the called party.

5. The method of Claim 4, wherein:
the subscription information of the called party is stored in a Home Location Register, HLR; and
the process of determining that the called party has subscribed to the multimedia RBT service comprises:
determining, by the HLR, that the called party has subscribed to an audio RBT service or the multimedia RBT service after determining that the called party has subscribed to a RBT service;
sending to the calling MSC server the subscription information indicating whether the called party has subscribed to the audio RBT service or the multimedia RBT service; and
determining, by the calling MSC server, that the called party has subscribed to the multimedia RBT service according to the subscription information provided by the HLR.

6. The method of Claim 4, wherein the subscription information of the called party is stored in an HLR, the method further comprising:
providing, by the HLR, the subscription information of the called party for the calling MSC server after determining that the called party has subscribed to an RBT service; and
instructing the MRS to play an audio RBT to the calling party according to the subscription information of the called party.

7. The method of Claim 1, wherein the process of playing the multimedia RBT to the calling party comprises:
playing (209) the multimedia RBT customized by the called party to the calling party.

8. The method of Claim 7, further comprising:
providing a called number for the MRS, wherein
the process of playing the multimedia RBT customized by the called party to the calling party comprises:
playing the multimedia RBT corresponding to a called number, or
providing the called number and a calling number for the MRS, wherein
playing the multimedia RBT corresponding to a combination of the called number and the calling number.

9. The method of Claim 7, wherein the process of playing multimedia RBT according to the result of the first media capability negotiation comprises:
determining, by the MRS, whether the result of the first media capability negotiation supports a multimedia format;
playing the multimedia RBT if the result of first media capability negotiation supports the multimedia format; and
playing an audio RBT if the result of the first media capability negotiation does not support the multimedia format.

10. The method of Claim 1, further comprising:
detecting (210) a notification that the called party answers the call;
instructing (211) the MRS to stop playing the multimedia RBT to the calling party,
performing (212) a second media capability negotiation between the calling party and the called party, and
communicating between the calling party and the called party according to a result of second media capability negotiation.

11. The method of Claim 1, further comprising:
detecting (210) a notification that the called party answers the call,
performing (212) a second media capability negotiation between the calling party and the called party,
communicating between the calling party and the called party according to a result of second media capability negotiation, and
stopping, by the MRS, playing the multimedia RBT to the calling party.

12. The method of Claim 1, further comprising:
detecting (210) a notification that the called party answers the call,
instructing (211) the MRS to stop playing the multimedia RBT to the calling party,
performing (212) a second media capability negotiation between the calling party and the called party simultaneously, and
communicating between the calling party and the called party according to a result of second media capability negotiation.

13. The method of Claim 10, 11 or 12, wherein the process of performing the second media capability negotiation between the calling party and the called party comprises:
performing (212) the second media capability negotiation with the called party according to the result of the first media capability negotiation.

14. The method of Claim 1, wherein the process of performing the media capability ne gotiation between the calling party a nd the MRS is controlled by a calling MSC server or a called MSC server.

15. A system for implementing a multimedia Ring Back Tone, RBT, service, **characterized by** comprising:
a Home Location Register, HLR, a Mobile Switching Center, MSC, server, a Media Resource Server, MRS, and a Media Gateway, MGW, the MSC server connecting with the HLR, MRS and MGW respectively, and the MRS connecting with the MGW;
the HLR is capable of storing subscription information of a called party and providing the subscription information for the MSC server;
the MSC server is capable of controlling a call procedure, instructing the MRS to play a multimedia RBT to the called party, and controlling the MGW to perform an interaction of the media information in the call procedure;
the MGW is capable of performing an interaction of the media information in the call procedure under the control of the MSC server;
the MRS is capable of storing the multimedia RBT, and playing the multimedia RBT to the calling party according to a result of a media capability negotiation under the control of the MSC server;
wherein the MRS play the multimedia RBT to the calling party is played via the MGW.

16. The system of Claim 15, wherein the MSC server is further capable of determining that the called party has subscribed to a multimedia RBT service according to the subscription information of the called party provided by the HLR.

17. The system of Claim 15, further comprising:
an audio resource server, capable of storing an audio RBT, and playing the audio RBT to the calling party when the called party does not subscribe the multimedia RBT.

## Patentansprüche

1. Verfahren zum Implementieren eines Multimedia-Rückrufton-Dienstes, Multimedia-RBT-Dienstes, das Folgendes umfasst:
Einleiten (203) eines Anrufs zu einem angerufenen Mobilvermittlungsstellenserver, MSC-Server, beim Empfangen einer Anrufanforderung durch einen anrufenden MSC-Server; und
Empfangen (204; 312) einer Meldung über den Erfolg des Funkrufs des angerufenen Teilnehmers von dem angerufenen MSC-Server durch den anrufenden MSC-Server;
**dadurch gekennzeichnet, dass** es Folgendes umfasst:
Ausführen (206) einer ersten Medienfähigkeitsverhandlung zwischen einem anrufenden Teilnehmer und einem Medienressourcenserver, MRS, durch den anrufenden MSC-Server oder den angerufenen MSC-Server; und
Anweisen (207) des MRS durch den anrufenden MSC-Server, in Übereinstimmung mit einem Ergebnis der ersten Medienfähigkeitsverhandlung einen Multimedia-RBT für den anrufenden Teilnehmer abzuspielen, wobei der für den anrufenden Teilnehmer durch den MRS abgespielte Multimedia-RBT über ein Medien-Gateway, MGW, abgespielt wird.

2. Verfahren nach Anspruch 1, wobei vor dem Einleiten des Anrufs zu dem angerufenen MSC-Server das Verfahren ferner Folgendes umfasst:
Senden (306) einer Hinzufügnachricht durch den anrufenden MSC-Server an das MGW, um das MGW anzuweisen, einen neuen Kontext zu erzeugen und einen Zeitmultiplex-Endpunkt (TDM-Endpunkt), einen Echtzeittransportprotokoll-Endpunkt (RTP-Endpunkt) und einen Multiplexendpunkt zu reservieren, die in dem Anrufprozess zu verwenden sind;
Empfangen (307) einer Antwort, die angibt, dass der Kontext erzeugt worden ist, nachdem das MGW den Kontext erzeugt hat und den TDM-Endpunkt, den RTP-Endpunkt und den Multiplexendpunkt reserviert hat, durch den anrufenden MSC-Server, wobei die Antwort den TDM-Endpunkt, den RTP-Endpunkt und den Multiplexendpunkt enthält, die durch das MGW reserviert worden sind.

3. Verfahren nach Anspruch 2, wobei nach dem Ausführen der ersten Medienfähigkeitsverhandlung zwischen dem anrufenden Teilnehmer und dem MRS das Verfahren ferner Folgendes umfasst:
Senden (319) einer Modifizierungsnachricht, die Medienfähigkeitsinformationen führt, durch den anrufenden MSC-Server an das MGW, um das MGW aufzufordern,
die relevanten Informationen in dem Kontext in Übereinstimmung mit dem Ergebnis der Medienfähigkeitsverhandlung zwischen dem anrufenden MSC-Server und dem MRS zu modifizieren;
Empfangen (320) einer Antwort, die angibt, dass die relevanten Informationen in dem Kontext modifiziert worden sind, durch den anrufenden MSC-Server, nachdem das MGW die relevanten Informationen in dem Kontext modifiziert hat und einen Medienkanal zwischen dem MGW und dem MRS durchgestellt hat.

4. Verfahren nach Anspruch 1, das ferner Folgendes umfasst:
Bestimmen (205) durch einen anrufenden Mobilvermittlungsstellen-Server, MSC-Server, dass der angerufene Teilnehmer einen Multimedia-RBT-Dienst abonniert hat, in Übereinstimmung mit den Abonnementinformationen des angerufenen Teilnehmers.

5. Verfahren nach Anspruch 4, wobei:
die Abonnementinformationen des angerufenen Teilnehmers in einem Heimatregister, HLR, gespeichert sind; und
der Prozess des Bestimmens, dass der angerufene Teilnehmer den Multimedia-RBT-Dienst abonniert hat, Folgendes umfasst:
Bestimmen durch das HLR, dass der angerufene Teilnehmer einen Audio-RBT-Dienst oder den Multimedia-RBT-Dienst abonniert hat, nach dem Bestimmen, dass der angerufene Teilnehmer einen RBT-Dienst abonniert hat;
Senden der Abonnementinformationen, die angeben, ob der angerufene Teilnehmer den Audio-RBT-Dienst oder den Multimedia-RBT-Dienst abonniert hat, an den anrufenden MSC-Server; und
Bestimmen durch den anrufenden MSC-Server, dass der angerufene Teilnehmer den Multimedia-RBT-Dienst abonniert hat, in Übereinstimmung mit den durch das HLR bereitgestellten Abonnementinformationen.

6. Verfahren nach Anspruch 4, wobei die Abonnementinformationen des angerufenen Teilnehmers in einem HLR gespeichert sind, wobei das Verfahren ferner Folgendes umfasst:
Bereitstellen der Abonnementinformationen des angerufenen Teilnehmers für den anrufenden MSC-Server durch das HLR nach dem Bestimmen, dass der angerufene Teilnehmer einen RBT-Dienst abonniert hat; und
Anweisen des MRS, einen Audio-RBT für den anrufenden Teilnehmer abzuspielen, in Übereinstimmung mit den Abonnementinformationen des angerufenen Teilnehmers.

7. Verfahren nach Anspruch 1, wobei der Prozess des Abspielens des Multimedia-RBT für den anrufenden Teilnehmer Folgendes umfasst:
Abspielen (209) des durch den angerufenen Teilnehmer angepassten Multimedia-RBT für den anrufenden Teilnehmer.

8. Verfahren nach Anspruch 7, das ferner Folgendes umfasst:
Bereitstellen einer angerufenen Nummer für den MRS, wobei der Prozess des Abspielens des durch den angerufenen Teilnehmer angepassten Multimedia-RBT für den anrufenden Teilnehmer Folgendes umfasst:
Abspielen des Multimedia-RBT, der einer angerufenen Nummer entspricht, oder Bereitstellen der angerufenen Nummer und einer anrufenden Nummer dem MRS, und
Abspielen des Multimedia-RBT, der einer Kombination aus der angerufenen Nummer und der anrufenden Nummer entspricht.

9. Verfahren nach Anspruch 7, wobei der Prozess des Abspielens von Multimedia-RBT in Übereinstimmung mit dem Ergebnis der ersten Medienfähigkeitsverhandlung Folgendes umfasst:
Bestimmen durch den MRS, ob das Ergebnis der ersten Medienfähigkeitsverhandlung ein Multimediaformat unterstützt;
Abspielen des Multimedia-RBT, falls das Ergebnis von erster Medienfähigkeitsverhandlung das Multimediaformat unterstützt; und
Abspielen eines Audio-RBT, falls das Ergebnis der ersten Medienfähigkeitsverhandlung das Multimediaformat nicht unterstützt.

10. Verfahren nach Anspruch 1, das ferner Folgendes umfasst:
Detektieren (210) einer Meldung, dass der angerufene Teilnehmer auf den Anruf antwortet;
Anweisen (211) des MRS, das Abspielen des Multimedia-RBT für den anrufenden Teilnehmer anzuhalten,
Ausführen (212) einer zweiten Medienfähigkeitsverhandlung zwischen dem anrufenden Teilnehmer und dem angerufenen Teilnehmer, und
Kommunizieren zwischen dem anrufenden Teilnehmer und dem angerufenen Teilnehmer in Übereinstimmung mit einem Ergebnis von zweiter Medienfähigkeitsverhandlung.

11. Verfahren nach Anspruch 1, das ferner Folgendes umfasst:
Detektieren (210) einer Meldung, dass der angerufene Teilnehmer auf den Anruf antwortet,
Ausführen (212) einer zweiten Medienfähigkeitsverhandlung zwischen dem anrufenden Teilnehmer und dem angerufenen Teilnehmer,
Kommunizieren zwischen dem anrufenden Teilnehmer und dem angerufenen Teilnehmer in Übereinstimmung mit einem Ergebnis von zweiter Medienfähigkeitsverhandlung, und
Anhalten des Abspielens des Multimedia-RBT für den anrufenden Teilnehmer durch den MRS.

12. Verfahren nach Anspruch 1, das ferner Folgendes umfasst:
Detektieren (210) einer Meldung, dass der angerufene Teilnehmer auf den Anruf antwortet,
Anweisen (211) des MRS, das Abspielen des Multimedia-RBT für den anrufenden Teilnehmer anzuhalten,
gleichzeitiges Ausführen (212) einer zweiten Medienfähigkeitsverhandlung zwischen dem anrufenden Teilnehmer und dem angerufenen Teilnehmer, und Kommunizieren zwischen dem anrufenden Teilnehmer und dem angerufenen Teilnehmer in Übereinstimmung mit einem Ergebnis von zweiter Medienfähigkeitsverhandlung.

13. Verfahren nach Anspruch 10, 11 oder 12, wobei der Prozess des Ausführens der zweiten Medienfähigkeitsverhandlung zwischen dem anrufenden Teilnehmer und dem angerufenen Teilnehmer Folgendes umfasst:
Ausführen (212) der zweiten Medienfähigkeitsverhandlung mit dem angerufenen Teilnehmer in Übereinstimmung mit dem Ergebnis der ersten Medienfähigkeitsverhandlung.

14. Verfahren nach Anspruch 1, wobei der Prozess des Ausführens der Medienfähigkeitsverhandlung zwischen dem anrufenden Teilnehmer und dem MRS durch einen anrufenden MSC-Server oder einen angerufenen MSC-Server gesteuert wird.

15. System zum Implementieren eines Multimedia-Rückrufton-Dienstes, Multimedia-RBT-Dienstes, **dadurch gekennzeichnet, dass** es Folgendes umfasst:
ein Heimatregister, HLR, einen Mobilvermittlungsstellen-Server, MSC-Server, einen Medienressourcenserver, MRS, und ein Medien-Gateway, MGW, wobei der MSC-Server mit dem HLR, dem MRS bzw. dem MGW verbunden ist und der MRS mit dem MGW verbunden ist;
wobei das HLR die Abonnementinformationen eines angerufenen Teilnehmers speichern und die Abonnementinformationen dem MSC-Server bereitstellen kann;
der MSC-Server eine Anrufprozedur steuern kann, den MRS anweisen kann, einen Multimedia-RBT dem angerufenen Teilnehmer abzuspielen, und das MGW steuern kann, um eine Wechselwirkung der Medieninformationen in der Anrufprozedur auszuführen;
das MGW eine Wechselwirkung der Medieninformationen in der Anrufprozedur unter der Steuerung des MSC-Servers ausführen kann;
der MRS den Multimedia-RBT speichern kann und den Multimedia-RBT dem anrufenden Teilnehmer in Übereinstimmung mit einem Ergebnis einer Medienfähigkeitsverhandlung unter der Steuerung des MSC-Servers abspielen kann;
wobei das MRS-Abspielen des Multimedia-RBT für den anrufenden Teilnehmer über das MGW abgespielt wird.

16. System nach Anspruch 15, wobei der MSC-Server ferner in Übereinstimmung mit den durch das HLR bereitgestellten Abonnementinformationen des angerufenen Teilnehmers bestimmen kann, dass der angerufene Teilnehmer einen Multimedia-RBT-Dienst abonniert hat.

17. System nach Anspruch 15, das ferner Folgendes umfasst:
einen Audioressourcenserver, der einen Audio-RBT speichern kann und den Audio-RBT dem anrufenden Teilnehmer abspielen kann, wenn der angerufene Teilnehmer den Multimedia-RBT nicht abonniert hat.

## Revendications

1. Procédé de mise en oeuvre d'un service de Tonalité de Rappel, RBT, multimédia, comprenant :
le lancement (203), par un serveur de Centre de Commutation de Services Mobiles, MSC, appelant, d'un appel vers un serveur MSC appelé à la réception d'une requête d'appel ; et
la réception (204, 312), par le serveur MSC appelant, d'une notification de réussite de recherche automatique de l'appelé depuis le serveur MSC appelé ;
**caractérisé en ce qu'**il comprend :
l'exécution (206), par le serveur MSC appelant ou le serveur MSC appelé, d'une première négociation de capabilité multimédia entre un appelant et un Serveur de Ressources Multimédia, MRS ; et
l'ordre (207), par le serveur MSC appelant, au MRS de reproduire une RBT multimédia à l'appelant en fonction du résultat de la première négociation de capabilité multimédia, la RBT multimédia reproduite par le MRS à l'appelant étant reproduite par l'intermédiaire d'une Passerelle Multimédia, MGW.

2. Procédé selon la revendication 1, comprenant en outre, avant le lancement de l'appel vers le serveur MSC appelé :
l'envoi (306), par le serveur MSC appelant, d'un message d'ajout à la MGW pour ordonner à la MGW de créer un nouveau Contexte et de réserver un point final de Multiplexage par Répartition dans le temps (TDM), un point final de Protocole de Transport en Temps Réel (RTP) et un point final de multiplexage à utiliser dans le processus d'appel ;
la réception (307), par le serveur MSC appelant, d'une réponse indiquant que le Contexte a été créé après que la MGW a créé le contexte et a réservé le point final TDM, le point final RTP et le point final de multiplexage, la réponse contenant le point final TDM, le point final RTP et le point final de multiplexage réservé par la MGW.

3. Procédé selon la revendication 2, comprenant en outre, après l'exécution de la première négociation de capabilité multimédia entre l'appelant et le MRS :
l'envoi (319), par le serveur MSC appelant, d'un message de modification portant des informations de capabilité multimédia à la MGW afin de demander à la MGW de modifier les informations pertinentes dans le Contexte en fonction du résultat de la négociation de capabilité multimédia entre le serveur MSC appelant et le MRS ;
la réception (320), par le serveur MSC appelant, d'une réponse indiquant que les informations pertinentes dans le Contexte ont été modifiées après que la MGW a modifié les informations pertinentes dans le Contexte et a établi un canal multimédia entre la MGW et le MRS.

4. Procédé selon la revendication 1, comprenant en outre :
la détermination (205), par un serveur de Centre de Commutation de Services Mobiles, MSC, appelant, que l'appelé a souscrit à un service RBT multimédia en fonction des informations d'abonnement de l'appelé.

5. Procédé selon la revendication 4, dans lequel :
les informations d'abonnement de l'appelé sont mémorisées dans un Enregistreur de Position de Rattachement, HLR ; et
le processus de détermination que l'appelé a souscrit au service RBT multimédia comprend :
la détermination, par le HLR, que l'appelé a souscrit à un service RBT audio ou au service RBT multimédia après avoir déterminé que l'appelé a souscrit à un service RBT;
l'envoi au serveur MSC appelant des informations d'abonnement indiquant si l'appelé a souscrit au service RBT audio ou au service RBT multimédia ; et
la détermination, par le serveur MSC appelant, que l'appelé a souscrit au service RBT multimédia en fonction des informations d'abonnement fournies par le HLR.

6. Procédé selon la revendication 4, dans lequel les informations d'abonnement de l'appelé sont mémorisées dans un HLR, le procédé comprenant en outre :
la fourniture, par le HLR, des informations d'abonnement de l'appelé au serveur MSC appelant après avoir déterminé que l'appelé a souscrit à un service RBT ; et
l'ordre au MRS de reproduire une RBT audio à l'appelant en fonction des informations d'abonnement de l'appelé.

7. Procédé selon la revendication 1, dans lequel le processus de reproduction de la RBT multimédia à l'appelant comprend :
la reproduction (209) de la RBT multimédia personnalisée par l'appelé à l'appelant.

8. Procédé selon la revendication 7, comprenant en outre :
la fourniture d'un numéro appelé au MRS, dans lequel
le processus de reproduction de la RBT multimédia personnalisée par l'appelé à l'appelant comprend :
la reproduction de la RBT multimédia correspondant à un numéro appelé, ou
la fourniture du numéro appelé et d'un numéro appelant au MRS, et
la reproduction de la RBT multimédia correspondant à une combinaison du numéro appelé et du numéro appelant.

9. Procédé selon la revendication 7, dans lequel le processus de reproduction de la RBT multimédia en fonction du résultat de la première négociation de capabilité multimédia comprend :
la détermination, par le MRS, que le résultat de la première négociation de capabilité multimédia supporte ou non un format multimédia ;
la reproduction de la RBT multimédia si le résultat de la première négociation de capabilité multimédia supporte le format multimédia ; et
la reproduction d'une RBT audio si le résultat de la première négociation de capabilité multimédia ne supporte pas le format multimédia.

10. Procédé selon la revendication 1, comprenant en outre :
la détection (210) d'une notification que l'appelé répond à l'appel ;
l'ordre (211) au MRS d'arrêter de reproduire la RBT multimédia à l'appelant ;
l'exécution (212) d'une seconde négociation de capabilité multimédia entre l'appelant et l'appelé, et
la communication entre l'appelant et l'appelé en fonction du résultat de la seconde négociation de capabilité multimédia.

11. Procédé selon la revendication 1, comprenant en outre :
la détection (210) d'une notification que l'appelé répond à l'appel ;
l'exécution (212) d'une seconde négociation de capabilité multimédia entre l'appelant et l'appelé, et
la communication entre l'appelant et l'appelé en fonction du résultat de la seconde négociation de capabilité multimédia, et
l'arrêt, par le MRS, de la reproduction de la RBT multimédia à l'appelant.

12. Procédé selon la revendication 1, comprenant en outre :
la détection (210) d'une notification que l'appelé répond à l'appel ;
l'ordre (211) au MRS d'arrêter de reproduire la RBT multimédia à l'appelant ;
l'exécution (212) d'une seconde négociation de capabilité multimédia entre l'appelant et l'appelé simultanément, et
la communication entre l'appelant et l'appelé en fonction d'un résultat de la seconde négociation de capabilité multimédia.

13. Procédé selon la revendication 10, 11 ou 12, dans lequel le processus d'exécution de la seconde négociation de capabilité multimédia entre l'appelant et l'appelé comprend :
l'exécution (212) de la seconde négociation de capabilité multimédia avec l'appelé en fonction du résultat de la première négociation de capabilité multimédia.

14. Procédé selon la revendication 1, dans lequel le processus d'exécution de la négociation de capabilité multimédia entre l'appelant et le MRS est commandé par un serveur MSC appelant ou un serveur MSC appelé.

15. Système de mise en oeuvre d'un service de Tonalité de Rappel, RBT, multimédia, **caractérisé en ce qu'**il comprend :
un Enregistreur de Position de Rattachement, HLR, un serveur de Centre de Commutation de Services Mobiles, MSC, un Serveur de Ressources Multimédia, MRS, et une Passerelle Multimédia, MGW, le serveur MSC se connectant au HLR, au MRS et à la MGW respectivement, et le MRS se connectant à la MGW ;
le HLR est capable de mémoriser des informations d'abonnement d'un appelé et de fournir les informations d'abonnement au serveur MSC ;
le serveur MSC est capable de commander une procédure d'appel, d'ordonner au MRS de reproduire une RBT multimédia à l'appelé, et de commander la MGW pour exécuter une interaction des informations multimédia dans la procédure d'appel ;
la MGW est capable d'exécuter une interaction des informations multimédia dans la procédure d'appel sous le contrôle du serveur MSC ;
le MRS est capable de mémoriser la RBT multimédia, et de reproduire la RBT multimédia à l'appelant en fonction du résultat d'une négociation de capabilité multimédia sous le contrôle du serveur MSC ;
dans lequel le MRS reproduit la RBT multimédia à l'appelant par l'intermédiaire de la MGW.

16. Système selon la revendication 15, dans lequel le serveur MSC est capable en outre de déterminer que l'appelé a souscrit à un service RBT multimédia en fonction des informations d'abonnement de l'appelé fournies par le HLR.

17. Système selon la revendication 15, comprenant en outre :
un serveur de ressources audio, capable de mémoriser une RBT audio, et de reproduire la RBT audio à l'appelant quand l'appelé ne souscrit pas à la RBT multimédia.
